# EUROPEAN PATENT SPECIFICATION

(11) **EP 2 993 366 B1**
(45) Date of publication and mention of the grant of the patent: **16.01.2019**
(21) Application number: 15181622.0
(22) Date of filing: 19.08.2015
(51) Int. Cl.: F16D 3/06, F16D 3/84

(54) **A RING COMPONENT EMBODIMENT IN CARDAN SHAFT SLIDING ASSY**
RINGKOMPONENTENAUSFÜHRUNGSFORM IN KARDANWELLENGLEITBAUGRUPPE
MODE DE RÉALISATION D'UN COMPOSANT DE BAGUE DANS UN ENSEMBLE COULISSANT À ARBRE À CARDAN

(30) Priority: 28.08.2014 TR 201410067
(43) Date of publication of application: 09.03.2016
(73) Proprietor: Tirsan Kardan Sanayi Ve Ticaret Anonim Sirketi, 45030 Manisa (TR)
(72) Inventor: KORUK, ADNAN, Manisa (TR); ÖZGÜRLER, HÜSEYIN, Manisa (TR); TASAN, KORKUT, Manisa (TR); SEN, ONUR, Manisa (TR)
(74) Representative: Yamankaradeniz, Kemal

(56) References cited:
- DE-A1- 1 530 971
- US-A- 1 536 986
- US-A- 3 197 216
- US-A- 4 153 260
- US-A- 4 215 869

## Description

### Technical Field

The invention relates to sliding assy transmitting the rotating motion in cardan shafts, and consisting of interlocked male and female components providing sliding motion in axial direction with regard to each other.

The present invention relates to a ring component operates between the inner surface of a female component and the outer surface of a male component which forms a sliding assy structure in cardan shafts, makes the grease <distribution uniform between the spline surfaces co-operating between the female and male components in contact with each other, and therefore makes the sliding force uniform, and prevents formation of vibration, noise and similar negative effects caused by gaps between the spline surfaces.

### The Prior Art

Cardan shafts are transmission components used in providing motion to motor vehicles by means of receiving and transmitting the rotating motion and power generated in the engine, from the engine or the gearbox to the differential gear of the vehicle. The resultant distance between the differential gear and the engine or the gearbox varies due to the movement of the axles of the vehicle as a result of road conditions. The cardan shaft performs its task by means of transmitting the rotating motion, and at the same time, maintaining the power transmission while compensating this varying resultant distance. Compensation of this distance is ensured by the axial-direction sliding movement of the female and male components of the sub-assembly group called as the sliding assy, which also transmits the rotating motion, besides ensuring a sliding movement in the axial direction. This axial sliding movement is a relative linear movement of the female and male components with regard to each other in a positive or a negative direction.

The sliding assy consists of two separate components as female and male components, each of which having a spline form, and which transmit the rotating motion received at the cardan shaft by means of driving each other with the contact provided between these reciprocal spline forms, and at the same time, which make a sliding movement in the axial direction.

The male component has a spline form on its outer surface. On the other hand, the female component is a hollow cylindrical component, which has an inner spline form on its hollow inner surface. The male component is found within the female component. Meanwhile, the spline forms of both components clutch each other, and are fitted within each other via contact through the spline surfaces. As a result of the connection provided between the two components via the spline surface contact, the rotating motion is transmitted from one component to the other and at the same time, sliding movement in the axial direction is provided.

In the prior art, the components forming the sliding assy have a linear motion in the axial direction relative to each other. During this movement, greasing is of great importance and is required to be provided between the female and male components of the sliding assy in order to prevent abrasion on their operation and contact surfaces. After greasing, the inadequate and non-uniform layer of grease between the female and male spline contact surfaces of the sliding assy increases friction and therefore elevates the level of abrasion between the contact surfaces. Similarly, the sliding force that actuates the sliding movement in the sliding assy can not be distributed equally on the components due to non-uniform greasing, and as a result, the product has low performance in terms of abrasion, vibration, and noise formed on the components.

In the patent research made in relation with the prior art, American Patent Application No. US7052398B2 is encountered. This application relates to a sliding assy, comprising a mounting protrusion, which is a part of the patented embodiment, and which is formed on the internal surface of the sliding assy female piece.

Insulation components having lip structure are adapted to this mounting protrusionin order to prevent entrance of undesired impurities into the sliding assy. Also, an internal volume is formed by sealing components in order to perform greasing. This internal volume is a closed volume and it is supported by an spring mechanism and it is positioned outside the spline profiles.

In the present invention, different from the relevant patent document, the purpose is to provide uniform distribution of grease found inside the volume, instead of preventing grease from getting out, and therefore, a ring component with a half-open volume is used.

Another cardan shaft sliding assy comprising a seal mounted on the female component is e.g. known from US 4 215 869 A.

### Purpose of the Invention

The purpose of the invention is to provide a ring component, which operates along the spline form of a male component having a circular and spline form and via relative motion by means of contacting the spline form of male component during an axial-direction sliding movement of female and male components forming a sliding assy.

A purpose of the invention is to provide a sweeping movement on the spline tip diameter surface of the male component, during said relative motion, by means of a circular form found at one end of the ring component embodiment, and on the male component spline form side surface by means of a spline form found at the other end of the ring component, and thus distribute the grease to the spline surfaces of the male and female components that contact each other, whereby lubrication is of greater importance, and obtain a uniform film layer on these surfaces by homogenizing the grease distribution, and in this way, minimizing surface abrasion.

Another purpose of the invention is to ensure that the effect of the sliding force applied on the components to start the relative sliding motion on the spline forms are uniform, and thus prevent formation of regionally concentrated abrasions on the sliding assy by achieving a smooth freedom of movement.

Another purpose of the invention is to improve the acoustic performance of the product on the vehicle by means of preventing the negative effects to be formed by a gap between the spline surfaces of the components that are ought to be in contact with each other.

### Figures for Better Understanding of the Invention

Figure-1; is the general assembly view of the cardan shaft and the sliding assy.
Figure-2; is the demounted view of the male and female components forming the sliding assy.
Figure-3; is the demounted view of the sliding assy female component and the ring component.
Figure-4; is the mounted view of the sliding assy female component and the ring component.
Figure-5; individually gives the two-dimensional front and detailed side views of the ring component according to the present invention.
Figure-6; is the close-up mounted view of the ring component according to the present invention.
Figure-7; is the section and close-up view of the spline form of the sliding assy male component.

### Parts References

10- Cardan shaft
11- Ring component
12- Circular form
13- Pocket form
14- Spline form
20- Sliding assy
21- Female component
22- Male component
23- Internal spline form
24- Mounting protrusion
25- Spline tip diameter surface
26- Outer spline form
27- Open-ended form
28- Spline side surface
30- Axial sliding movement

### Detailed Description of the Invention

In Figures-1 and 2; the mounted and demounted views of a cardan shaft (10) comprising a sliding assy (20) formed of a female component (21) having an inner spline form (23) and a male component (22) having an outer spline form (26) are shown.

In Figure-3, a mounting protrusion (24) of a female component (21) having an open-ended form (27) and a ring component (11) fixed to said mounting protrusion (24) are shown.

As can be seen from Figures-5 and 6; the ring component (11) has a circular form (12) at one end, a spline form (14) that is the same with the inner spline form (23) of the female component (21), at the other end, and a pocket form (13) between these two forms (12, 14).

This embodiment is included in the sliding assy (20) preferably, by means of a close-fit bearing at the mounting protrusion (24) found at the end portion of the female component (21) having a retaining wall. Due to the spline form (14) provided on the ring component (11), contact is ensured between the spline form (14) and the outer spline form (26) of the male component (22) such that they would continuously clutch one another. The contact along the spline surfaces is maintained even during the axial sliding movements (30) of the components with regard to each other.

During the axial sliding movements (30) of the female and male components (21, 22) forming the sliding assy (20), sweeping motions via contact are performed at the male component tip diameter surface (25) by the circular form (12) found at one end of the ring component (11), and at the male component spline side surface (28) by the spline form (14) found at the other end of the ring component (11). Moreover, also during the axial sliding movements (30), the grease swept from the male component (22) spline tip diameter surface (25) by the ring component (11) circular form (12) is collected in the pocket form (13), and kept here in order to be used at the spline side surfaces (28), where the spline forms (14) contact each other. Then, the grease found within the pocket form (13) reach the spline side surfaces (28) during the axial sliding movement (30) by means of the ring component (11) spline form (14). As a result of this, grease concentrates at the contact surfaces between the male component (22) and the female component (21) spline forms (14), or in other words, at the spline side surfaces (28) where friction occurs, and therefore, a uniform film layer is formed by means of providing an almost equal grease distribution on these surfaces. As a result of said uniform distribution, the lubrication factor is increased significantly. Moreover, the sliding force that actuates the axial sliding movement (30) also have a uniform distribution on the inner spline forms (23) and the outer spline forms (26). As a result, abrasion of the sliding assy is prevented with this distribution in the sliding force. Moreover, the axial sliding movement (30) is smoothly performed thanks to this uniform sliding force distribution, and thus improvement is made on the product in terms of acoustic performance.

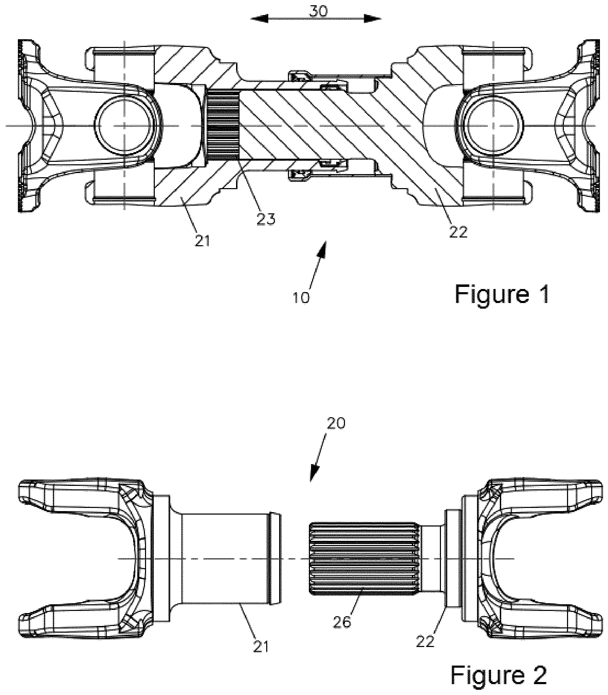

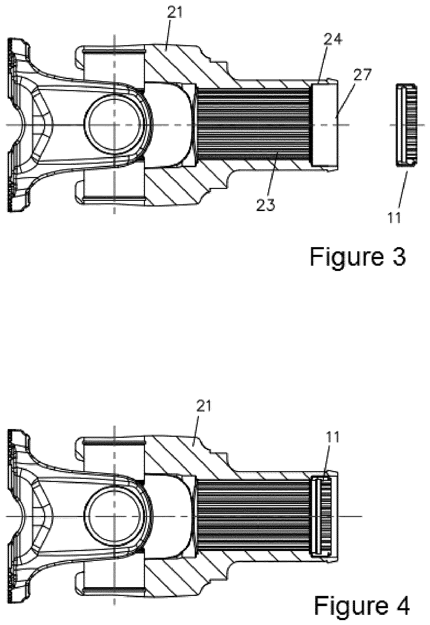

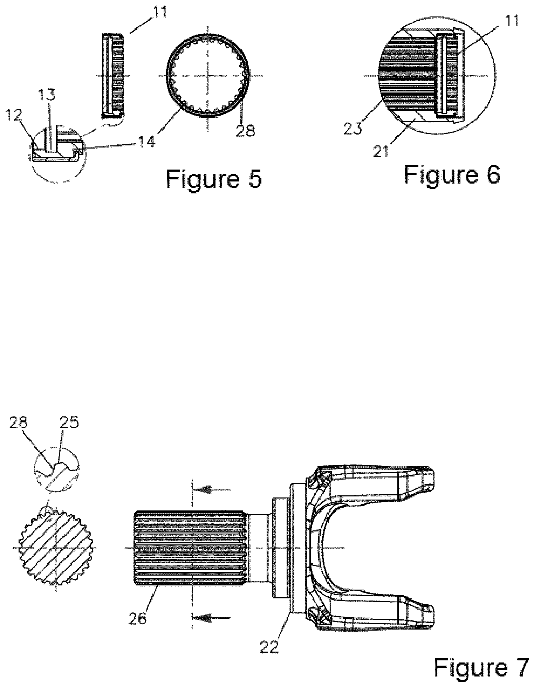

## Claims

1. A cardan shaft (10) sliding assy (20) comprising a female component (21) having an inner spline form (23), a male component (22) having an outer spline form (26), and a mounting protrusion (24) of the female component (21) with an open-ended form (27), and further comprising a ring component (11) positioned at the open-ended form (27) of said sliding assy (20) female component (21), and
a spline form (14) found at one end of said ring component (11) and having the same spline form with the female component (21) at the inner surface, the cardan shaft sliding assy (20) **characterized in that** it comprises;
- at the other end of said ring component (11), a circular form (12) that is in contact with the male component (22) outer spline form (26) tip diameter surface (25), and
- a pocket form (13) between the circular (12) and spline forms (14) of said ring component (11) end parts.

## Patentansprüche

1. Kardanwellen- (10) Gleitbaugruppe (20), aufweisend eine aufnehmende Komponente (21) mit einer inneren Kerbverzahnungsform (23), eine Steckkomponente (22) mit einer äußeren Kerbverzahnungsform (26), und einen Montagevorsprung (24) der aufnehmenden Komponente (21) mit einer offenen Form (27), und ferner aufweisend eine Ringkomponente (11), die an der offenen Form (27) der aufnehmenden Gleitbaugruppen- (20) Komponente (21) positioniert ist, und eine Kerbverzahnungsform (14), die sich an einem Ende der Ringkomponente (11) befindet und dieselbe Kerbverzahnungsform mit der aufnehmenden Komponente (21) an der Innenfläche hat, wobei die Kardanwellen-Gleitbaugruppe (20) **dadurch gekennzeichnet ist, dass** sie aufweist;
- eine kreisförmige Form (12), die sich mit der Spitzendurchmesserfläche (25) der äußeren Kerbverzahnungsform (26) der Steckkomponente (22) am anderen Ende der Ringkomponente (11) in Kontakt befindet, und
- eine Taschenform (13) zwischen den kreisförmigen (12) und Kerbverzahnungsformen (14) der Gleitringkomponenten- (11) Endteile.

## Revendications

1. Ensemble coulissant (20) à arbre à cardan (10) comprenant un composant femelle (21) possédant une forme de cannelure interne (23), un composant mâle (22) possédant une forme de cannelure externe (26) et une saillie de montage (24) du composant femelle (21) avec une forme à extrémité ouverte (27) et comprenant en outre un composant de bague (11) positionné au niveau de la forme à extrémité ouverte (27) dudit composant femelle (21) de l'ensemble coulissant (20) et une forme de cannelure (14) présent à une extrémité dudit composant de bague (11) et possédant la même forme de cannelure avec le composant femelle (21) au niveau de la surface interne, ledit ensemble coulissant (20) à arbre à cardan étant **caractérisé en ce qu'**il comprend ;
- au niveau de l'autre extrémité dudit composant de bague (11), une forme circulaire (12) qui est en contact avec la surface (25) de diamètre de pointe de forme de cannelure externe (26) du composant mâle (22), et
- une forme de poche (13) entre les formes circulaire (12) et de cannelure (14) desdites parties d'extrémité de composant de bague (11).
